# EUROPEAN PATENT SPECIFICATION

(11) **EP 4 296 294 B1**
(45) Date of publication and mention of the grant of the patent: **17.12.2025**
(21) Application number: 22878880.8
(22) Date of filing: 05.10.2022
(51) Int. Cl.: C08G 63/692, C08L 67/02, C08K 5/5397, C08J 5/18

(54) **PHOSPHOROUS OLIGOMER, POLYESTER RESIN AND THERMOPLASTIC RESIN COMPOSITION COMPRISING SAME**
PHOSPHOROLIGOMER, POLYESTERHARZ UND THERMOPLASTISCHE HARZZUSAMMENSETZUNG DAMIT
OLIGOMÈRE PHOSPHORÉ, RÉSINE DE POLYESTER ET COMPOSITION DE RÉSINE THERMOPLASTIQUE LE COMPRENANT

(30) Priority: 07.10.2021 KR 20210133500; 24.08.2022 KR 20220106181
(43) Date of publication of application: 27.12.2023
(73) Proprietor: LG Chem, Ltd., Seoul 07336 (KR)
(72) Inventor: IM, Seoyoung, Daejeon 34122 (KR); JANG, Hanbit, Daejeon 34122 (KR); LEE, Hoyong, Daejeon 34122 (KR)
(74) Representative: Goddar, Heinz J.
(86) International application number: PCT/KR2022/014981
(87) International publication number: WO 2023/059059

(56) References cited:
- KR-A- 19980 079 379
- KR-A- 20050 100 925
- KR-A- 20050 100 925
- KR-A- 20090 070 314
- KR-B1- 102 163 330
- CAI CHANGCHEN ET AL: "Flame-retardant thermoplastic polyurethane based on reactive phosphonate polyol", vol. 46, no. 1, 14 March 2021 (2021-03-14), US, pages 130 - 137, XP093055395, ISSN: 0308-0501, Retrieved from the Internet <URL:https://onlinelibrary.wiley.com/doi/full-xml/10.1002/fam.2959> [retrieved on 20240919], DOI: 10.1002/fam.2959
- CAI CHANGCHEN, SUN QIAN, ZHANG KAI, BAI XIAOYU, LIU PENG, LI AIXIANG, LYU ZIJIAN, LI QIUHONG: "Flame‐retardant thermoplastic polyurethane based on reactive phosphonate polyol", FIRE AND MATERIALS, NEW YORK, NY, US, vol. 46, no. 1, 1 January 2022 (2022-01-01), US , pages 130 - 137, XP093055395, ISSN: 0308-0501, DOI: 10.1002/fam.2959

## Description

### TECHNICAL FIELD

The present disclosure relates to a novel phosphorus (P) containing oligomer, a polyester resin having both excellent flame retardancy and a high degree of polymerization by including a constitutional unit derived from the phosphorus containing oligomer, a thermoplastic resin composition including the polyester resin, and a molded article using the thermoplastic resin composition.

### BACKGROUND ART

Thermoplastic polyester resins are excellent in terms of chemical resistance, mechanical strength, heat resistance and electrical properties, and are thus widely used in housings and connectors of electronic, electrical and automotive parts. Since such polyester resins generally have a flammable property, it was used with a halogen-based flame retardant or an antimony-based flame-retardant auxiliary agent to be applied to a field requiring flame retardancy. However, the halogen-based flame retardant or the antimony-based flame-retardant auxiliary agent not only generates a large amount of toxic halogen gas in case of fire, but also has a problem in that an excessive amount of the flame retardant should be used in order to exhibit desired flame retarding effects.

In order to solve the above problems, a method of imparting flame retardancy to a polyester resin using a non-halogen flame retardant such as an organic phosphinate metal salt flame retardant, an organo phosphinic acid metal salt flame retardant, and a melamine polyphosphate has been proposed. However, when the flame retardancy is imparted by using the above-described compounds, an excessive amount of a low molecular weight flame retardant was used, thus excessively degrading the physical properties of the resin, and there are problems such as bleed-out of the flame retardant. In particular, when a flame retardant that does not participate in the polymerization reaction is used, the degree of polymerization is lowered, and thus the physical properties of the final polyester resin are necessarily degraded.

### Related Art

### Korean Patent No. 10-2285778

Fire and Materials, vol. 46, no. 1, 130-137, discloses polycarboxyethylphenyl ethylene phosphinate.
KR 2005 0100925 A discloses a polybutylene terephthalate resin prepared by injecting, on the basis of 100 parts by weight of a dicarboxylic acid, 0.5-30 parts by weight of a phosphorous-based flame retardant into an oligomer, which is prepared by the transesterification and polycondensation of the dicarboxylic acid and 1,4-butanediol compound.

### DESCRIPTION OF THE INVENTION

### TECHNICAL OBJECTIVE

Embodiments of the present invention are directed to a novel polyester resin with improved flame retardancy and polymerization degree by synthesizing a phosphorus (P) containing oligomer and performing polyester-polymerization using the phosphorus containing oligomer.

Embodiments of the present invention are also directed to a thermoplastic resin composition including the above-described polyester resin and a molded article using the thermoplastic resin composition.

Other objectives and advantages of the present invention may be more clearly explained by the following detailed description and claims.

### TECHNICAL SOLUTION

In order to achieve the above technical object, the present invention provides a phosphorus (P) containing oligomer represented by the following Chemical Formula 1: 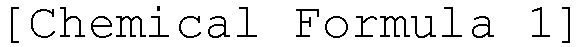 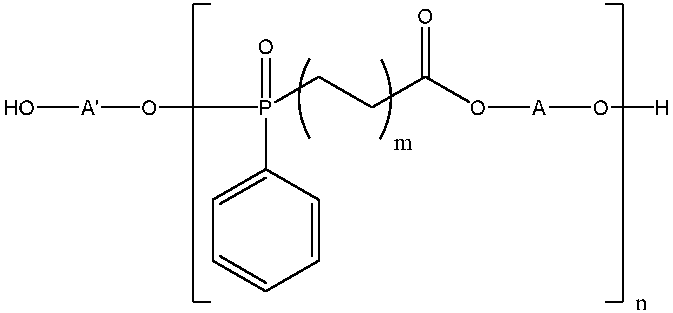 wherein in Chemical Formula 1,
A and A' are the same as or different from each other, and are each independently selected from the group consisting of a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene groups having 5 to 60 nuclear atoms,

Each of which are independently unsubstituted or substituted with one or more substituents selected from the group consisting of deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents are the same as or different from each other,
m is an integer in a range from 1 to 10, and
n is an integer in a range from 2 to 50;

In some embodiments, the phosphorus containing oligomer represented by the above Chemical Formula 1 may have a weight average molecular weight (Mw) in a range of 500 to 3,000 g/mol.

According to an embodiment, a polyester resin includes: a constitutional unit (a1) derived from a dicarboxylic acid; a constitutional unit (a2) derived from a diol; and a constitutional unit (a3) derived from the phosphorus containing oligomer represented by Chemical Formula 1.

In some embodiments, the constitutional unit (a3) may be included in an amount in a range from 0.5 to 30 parts by weight with respect to 100 parts by weight of the constitutional unit (a1) derived from a dicarboxylic acid.

In some embodiments, a phosphorus (P) atom content may be in a range of 10 to 10,000 ppm.

In some embodiments, the polyester resin may have a melt index (MI) in a range of 10 to 30 g/10min at 235°C, a weight average molecular weight (Mw) in a range of 10,000 to 100,000 g/mol, a melting point (Tₘ) measured by differential scanning calorimetry (DSC) in a range of 150 to 350°C, and an intrinsic viscosity (IV) in a range of of 0.7 to 1.5 cP (25°C).

In some embodiments, the polyester resin may be polybutylene terephthalate (PBT).

According to an embodiment, a thermoplastic resin composition includes the polyester resin.

According to an embodiment, a molded article includes the polyester resin.
Further embodiments are disclosed in the dependent claims.

### EFFECTS OF THE INVENTION

According to one or more embodiments of the present invention, flame retardant properties of a resin itself may be improved and physical stability of a final polyester resin may be further improved by controlling a polymerization degree, as a novel oligomer of a predetermined structure containing phosphorus (P) may be synthesized, instead of a phosphorus flame retardant in the form of a single compound that does not participate in a conventional polymerization reaction, and polyester-polymerizing is performed using the oligomer.

The effect according to the present invention is not limited by the descriptions exemplified above, and more various effects are included in the present specification.

### DETAILED DESCRIPTION OF THE INVENTION

Hereinafter, the present invention will be described in detail.

All terms (including technical and scientific terms) used herein may be used in the meaning commonly understood by those of ordinary skill in the art to which the present invention pertains, unless otherwise defined. In addition, terms defined in a commonly used dictionary are not to be interpreted ideally or excessively unless clearly defined in particular.

Throughout this specification, when a part "includes" a certain element, it is an open-ended term that includes the possibility of further including other elements rather than excluding other elements, unless otherwise stated.

As used herein, "preferred" and "preferably" refer to embodiments of the invention that may provide certain advantages under certain circumstances. However, other embodiments may also be preferred, under the same or other circumstances. Furthermore, the recitation of one or more preferred examples does not imply that other embodiments are not useful, nor is it intended to exclude other embodiments from the scope of the invention.

### Phosphorus containing oligomer

An example of the present invention may be an organophosphorous oligomer applied to polymerization of a polyester resin, and may be represented by the following Chemical Formula 1: 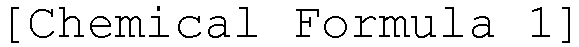 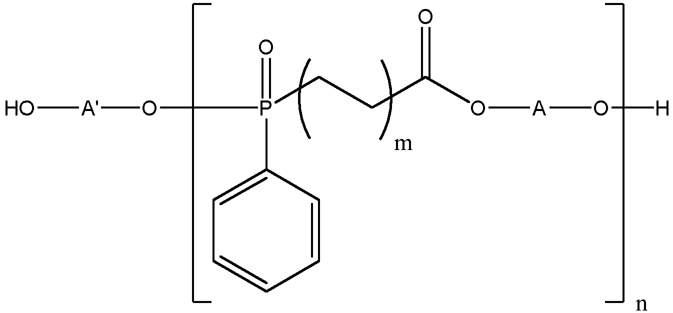 where in Chemical Formula 1,
A and A' are not particularly limited as long as they are divalent hydrocarbon groups known in the art. For example, A and A' may be the same as or different from each other, and may each independently be selected from the group consisting of a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene groups having 5 to 60 nuclear atoms. Specifically, A and A' may be the same as each other, and may be selected from, for example, a C₁ to C₁₀ alkylene group, a C₃ to C₁₂ cycloalkylene group, a C₆ to C₂₀ arylene group, and a heteroarylene groups having 5 to 60 nuclear atoms.

In such a case, m may be an integer in a range from 1 to 10, and n may be an integer in a range from 2 to 50.

The alkylene group, the alkenylene group, the alkynylene group, the cycloalkylene group, the heteroalkylene group, the heterocycloalkylene group, the arylene group and the heteroarylene of A and A' may each independently be unsubstituted or substituted with one or more substituents selected from the group consisting of deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents may be the same as or different from each other,

The phosphorus (P) containing oligomer of Chemical Formula 1 according to the present invention may serve as a phosphorus flame retardant used in preparing of a conventional polyester resin, that is, it may serve to prevent degradation of the polyester resin due to a heat applied to a transesterification reaction and a polycondensation reaction; and a reaction heat generated as a polymerization reaction proceeds, and to suppress yellowing caused by a reverse reaction or decomposition reactions, thus making the polyester resin substantially transparent and colorless. Furthermore, in terms of preventing environmental pollution, the phosphorus (P) containing oligomer may replace conventional halogen-based flame retardants. In addition, even if a small amount of the phosphorus flame-retardant oligomer is used, sufficient flame retardancy may be imparted, and degradation of physical properties such as viscosity, glass transition temperature, and processability of conventional polyesters may be prevented.

In a specific example of Chemical Formula 1, A and A' may each independently be selected from the group consisting of a C₁ to C₁₀ alkylene group, a C₃ to C₁₂ cycloalkylene group, and a C₆ to C₂₀ arylene group,
n may be an integer in a range from 2 to 45, and m may be an integer in a range from 1 to 5.

As a preferred example, the phosphorus containing oligomer represented by Chemical Formula 1 may be more specified into any one of Chemical Formulas 1A and 1B below, according to the type of substituents introduced to A and A'. However, the present invention is not limited thereto.

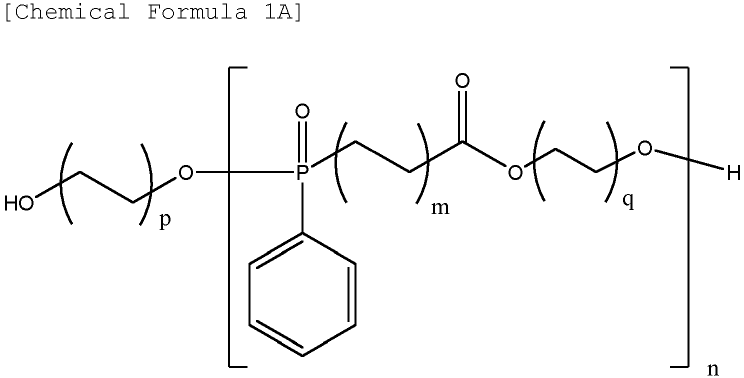

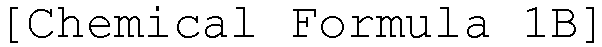

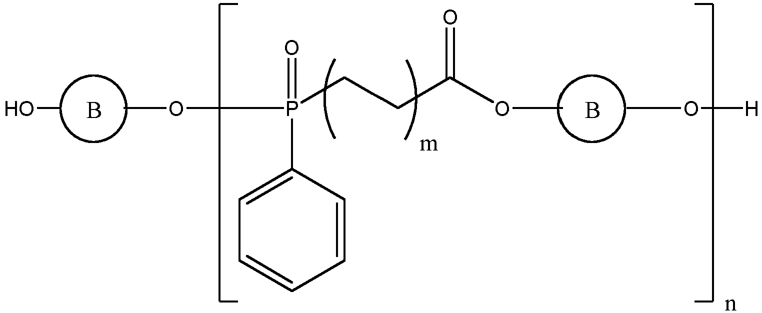

In Chemical Formulas 1A to 1B,
Ring B may be a common hydrocarbon-based ring known in the art, and may be in the form of condensed, fused, bridged or spirobonded with other adjacent rings. For example, the ring B may be selected from the group consisting of a monocyclic or polycyclic alicyclic ring, a monocyclic or polycyclic heteroalicyclic ring, a monocyclic or polycyclic aromatic ring, and a monocyclic or polycyclic heteroaromatic ring. Specifically, the ring B may be an alicyclic ring having 3 to 10 carbon atoms, a heteroalicyclic ring having 3 to 10 nuclear atoms, an aromatic ring having 6 to 20 carbon atoms, or a heteroaromatic ring having 5 to 20 nuclear atoms.

In such a case, p and q may each be an integer in a range from 1 to 10, and m and n may each be as defined in Chemical Formula 1.

In another preferred example, the phosphorus containing oligomer of Chemical Formula 1 may be more specified into the following Chemical Formula 1C according to m. However, the present invention is not limited thereto.

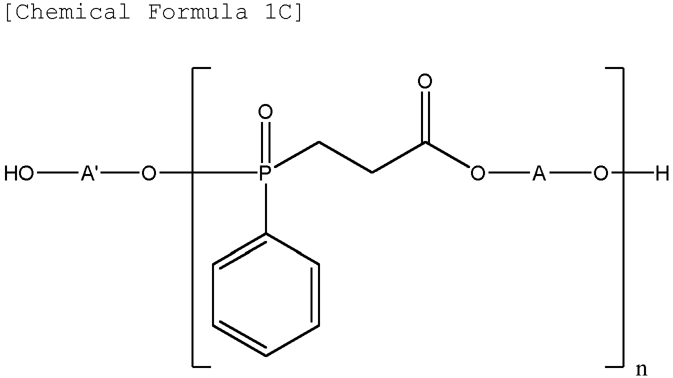

In the above Chemical Formula,
A, A' and n may each be as defined in Chemical Formula 1.

In a specific example of Chemical Formula 1C, A and A' may be the same as each other, and may be selected from the group consisting of a C₁ to C₁₀ alkylene group, a C₃ to C₁₂ cycloalkylene group, a C₆ to C₂₀ arylene group, and a heteroarylene group having 5 to 60 nuclear atoms.

The phosphorus containing oligomer represented by Chemical Formula 1C may be more specified into any one of Chemical Formulas 1D to 1E below, according to the type of substituents introduced to A and A'. However, the present invention is not limited thereto.

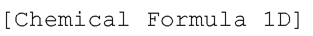

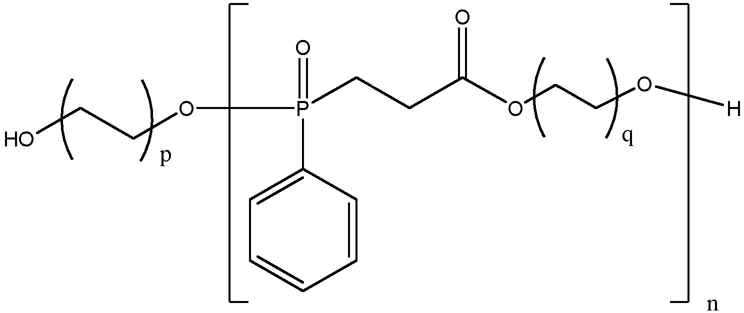

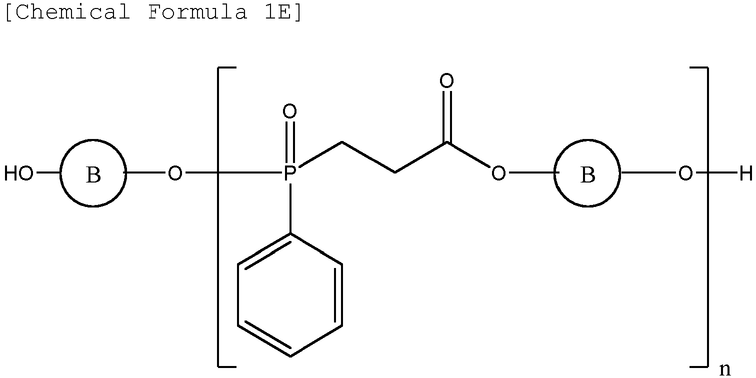

In the above Chemical Formula,
Ring B may be selected from an alicyclic ring having 3 to 10 carbon atoms and a C₆ to C₂₀ aromatic ring,
p and q may each independently be an integer in a range of 1 to 6, and
n may be an integer in a range from 2 to 45.

The above-described phosphorus containing oligomer of Chemical Formula 1 may be more specified into the compounds exemplified below. However, the phosphorus containing oligomer of the present invention is not limited by those exemplified below.

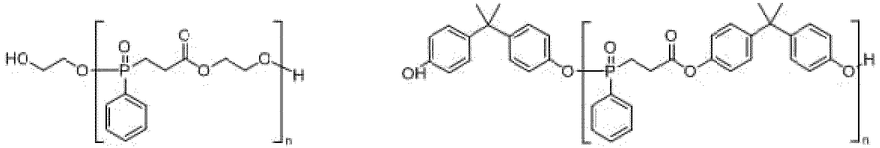

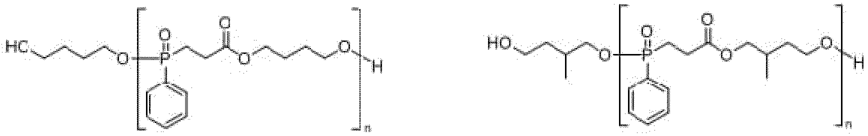

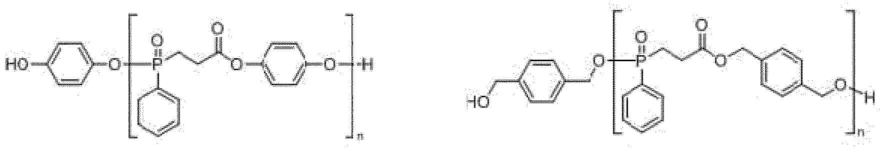

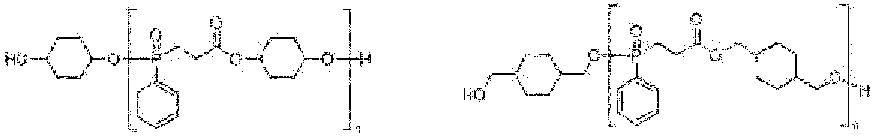

In the above Chemical Formula,
n may be as defined in Chemical Formula 1. For example, n may be an integer in a range of 2 to 45, specifically in a range of 2 to 30, and more specifically in a range of 3 to 25.

In a specific example, the phosphorus (P) containing oligomer represented by Chemical Formula 1 may have a weight average molecular weight (Mw) in a range of 500 to 3,000 g/mol, specifically in a range of 500 to 2,000 g/mol.

As used herein, "alkyl" may refer to a monovalent substituent derived from a linear or branched chain saturated hydrocarbon having 1 to 40 carbon atoms. Examples of such alkyl may include, but are not limited to, methyl, ethyl, propyl, isobutyl, sec-butyl, pentyl, iso-amyl, or hexyl.

As used herein, "alkenyl" may refer to a monovalent substituent derived from a linear or branched chain unsaturated hydrocarbon having 2 to 40 carbon atoms, having at least one carbon-carbon double bond. Examples of such alkenyl may include, but are not limited to, vinyl, allyl, isopropenyl, or 2-butenyl.

As used herein, "alkynyl" may refer to a monovalent substituent derived from a linear or branched chain unsaturated hydrocarbon having 2 to 40 carbon atoms, having at least one carbon-carbon triple bond. Examples of such alkynyl may include, but are not limited to, ethynyl, or 2-propynyl.

As used herein, "aryl" may refer to a monovalent substituent derived from an aromatic hydrocarbon having 6 to 60 carbon atoms which is in a structure with a single ring or two or more rings combined with each other. In addition, a form in which two or more rings are pendant (e.g., simply attached) to or fused with each other may also be included. Examples of such aryl may include, but are not limited to, phenyl, naphthyl, phenanthryl, or anthryl.

As used herein, "heteroaryl" may refer to a monovalent substituent derived from a monoheterocyclic or polyheterocyclic aromatic hydrocarbon having 5 to 40 nuclear atoms. In such a case, one or more carbons in the ring, preferably one to three carbons, are substituted with a heteroatom such as N, O, S or Se. In addition, a form in which two or more rings are pendant to or fused with each other may be included and a form fused with an aryl group may be included. Examples of such heteroaryl may include, but are not limited to, a 6-membered monocyclic ring including, for example, pyridyl, pyrazinyl, pyrimidinyl, pyridazinyl and triazinyl; a polycyclic ring including, for example, phenoxathienyl, indolinzinyl, indolyl, purinyl, quinolyl, benzothiazole, and carbazolyl; 2-furanyl; N-imidazolyl; 2-isoxazolyl; 2-pyridinyl; or 2-pyrimidinyl.

As used herein, "cycloalkyl" may refer to a monovalent substituent derived from a monocyclic or polycyclic non-aromatic hydrocarbon having 3 to 40 carbon atoms. Examples of such cycloalkyl may include, but are not limited to, cyclopropyl, cyclopentyl, cyclohexyl, norbornyl, or adamantine.

As used herein, "heterocycloalkyl" may refer to a monovalent substituent derived from a non-aromatic hydrocarbon having 3 to 40 nuclear atoms, where one or more carbons in the ring, preferably one to three carbons, are substituted with a heteroatom such as N, O, S or Se. Examples of such heterocycloalkyl may include, but are not limited to, morpholine, or piperazine.

### Polyester resin

An example of the present invention is a polyester resin having excellent flame retardancy by including phosphorus (P) in a basic skeleton of the resin itself. In particular, it is differentiated from a conventional polyester resin to which a phosphorus containing monomer is applied in that it includes a constitutional unit (a3) derived from the phosphorus containing oligomer represented by Chemical Formula 1 above.

In a specific example, the polyester resin may include a constitutional unit (a1) derived from a dicarboxylic acid; a constitutional unit (a2) derived from a diol; and a constitutional unit (a3) represented by the following Chemical Formula 2.

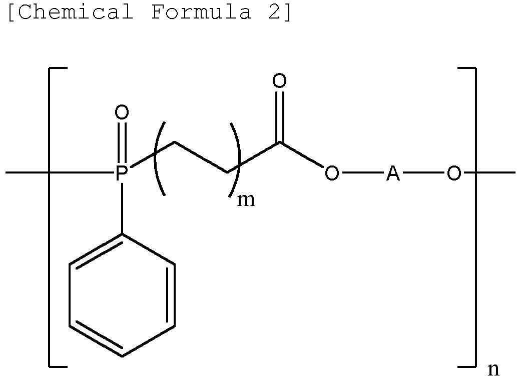

In Chemical Formula 2,
A may be selected from a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene groups having 5 to 60 nuclear atoms,
the alkylene group, the alkenylene group, the alkynylene group, the cycloalkylene group, the heteroalkylene group, the heterocycloalkylene group, the arylene group and the heteroarylene of A may each independently be unsubstituted or substituted with one or more substituents selected from the group consisting of deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, they may be the same as or different from each other,
m may be an integer in a range from 1 to 10, and
n may be an integer in a range from 2 to 50.

In a specific example of Chemical Formula 2, A may be selected from a C₁ to C₁₀ alkylene group, a C₃ to C₁₂ cycloalkylene group, a C₆ to C₂₀ arylene group, and a heteroarylene group having 5 to 60 nuclear atoms,
m may be an integer in a range from 1 to 6, and n may be an integer in a range from 2 to 45.

As a preferred example, the constitutional unit (a3) represented by Chemical Formula 2 may be more specified into any one of Chemical Formulas 2A and 2B below according to the type of substituent introduced to A. However, the present invention is not limited thereto.

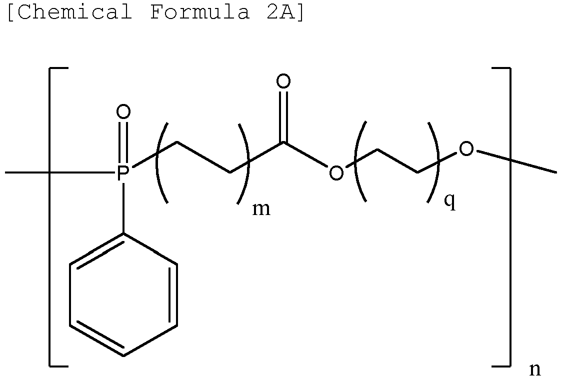

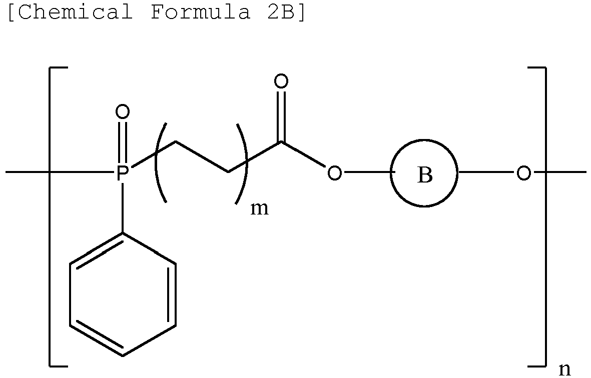

In Chemical Formulas 2A to 2B,
Ring B may be selected from: a monocyclic or polycyclic alicyclic ring, a heteroalicyclic ring, an aromatic ring and a heteroaromatic ring,
q may be an integer in a range from 1 to 10, and
m and n may each be as defined in Chemical Formula 1.

In another preferred example, the constitutional unit (a3) represented by Chemical Formula 2 may be more specified into the following Chemical Formula 2C according to m. However, the present invention is not limited thereto.

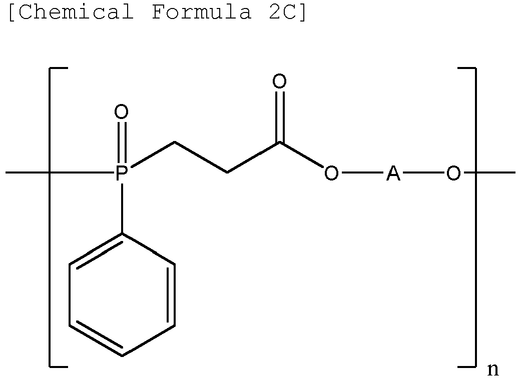

In the above Chemical Formula,
A and n may each be as defined in Chemical Formula 2.

The constitutional unit (a3) represented by the above-described Chemical Formula 2C may be more specified into any one of the following Chemical Formulas 2D to 2E according to the type of the substituent introduced to A. However, the present invention is not limited thereto.

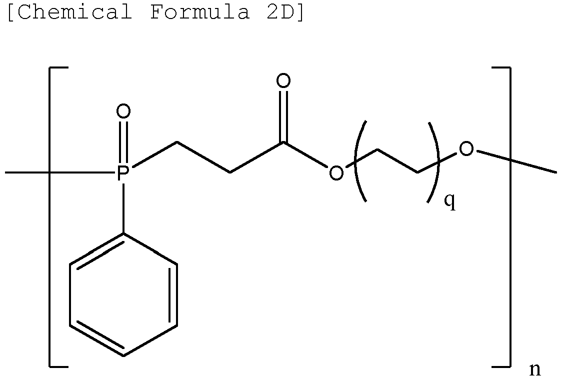

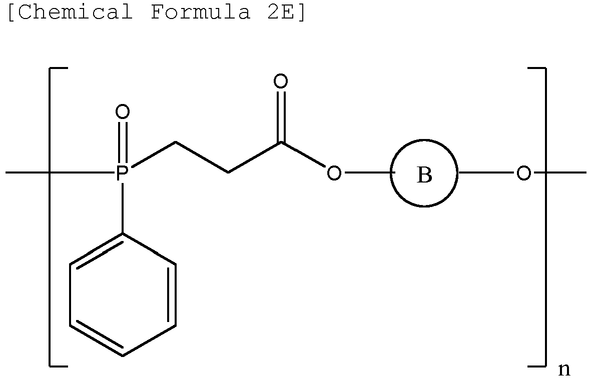

In the above Chemical Formula,
Ring B may be selected from: an alicyclic ring having 3 to 10 carbon atoms and a C₆ to C₂₀ aromatic ring,
q may be an integer in a range of 1 to 6,
n may be an integer in a range from 2 to 45.

The constitutional unit (a1) constituting the polyester resin according to the present invention is derived from a carboxylic acid, and may be derived from conventional dicarboxylic acid monomers and derivatives thereof known in the art.

Non-limiting examples of applicable dicarboxylic acids may include terephthalic acid, oxalic acid, malonic acid, azelaic acid, fumaric acid, pimelic acid, suberic acid, isophthalic acid, dodecane dicarboxylic acid, naphthalene dicarboxylic acid, biphenyldicarboxylic acid, 1,4-cyclohexane dicarboxylic acid, 1,3-cyclohexane dicarboxylic acid, succinic acid, glutaric acid, adipic acid, sebacic acid, 2,6-naphthalene dicarboxylic acid, 1,2-norbornane dicarboxylic acid, 1,3-cyclobutane dicarboxylic acid, 1,4-cyclohexane dicarboxylic acid, 5-sodium sulfoisophthalic acid, 5-potassium sulfoisophthalic acid, 5-lithium sulfoisophthalic acid, 2-sodium sulfoterephthalic acid, or a mixture thereof. A carboxylic acid ester derivative may be used if necessary, and specific examples thereof may include esters of dicarboxylic acid compounds, that is, dimethyl terephthalate, diethyl terephthalate, terephthalic acid-2-hydroxyethylmethyl ester, 2,6-naphthalenedicarboxylic acid dimethyl, isophthalate dimethyl, dimethyl adipate, dimethyl maleate, and dimethyl dimer acid, but the present invention is not limited thereto.

In a specific example, the constitutional unit (a1) derived from dicarboxylic acid may include at least one of terephthalic acid, isophthalic acid, dimethyl terephthalate, diethyl isophthalate, and adipic acid in an amount of 10 mol% or more, and specifically in a range of 20 to 70 mol%, with respect to the total mol% of the corresponding constitutional unit (a1).

The constitutional unit (a2) constituting the polyester resin according to the present invention may be derived from a diol, and may be derived from conventional diol-based monomers and derivatives thereof known in the art.

As the diol-based monomer, an aliphatic diol having 2 to 10 carbon atoms may be used, and non-limiting examples thereof may include ethylene glycol, 1,2-propylene glycol, 1,2-butylene glycol, 1,3-butylene glycol, 2,3-butylene glycol, 1,4-butylene glycol, 1,5-pentanediol, neopentyl glycol, 1,3-propylene glycol, diethylene glycol, triethylene glycol, 1,2-cyclohexanediol, 1,3-cyclohexanediol, 1,4-cyclohexanediol, propanediol, 1,6-hexanediol, tetramethylcyclobutanediol, 1,4-cyclohexane diethanol, 1,10-decamethylene glycol, 1,12-dodecanediol, polyoxyethylene glycol, polyoxymethylene glycol, polyoxytetramethylene glycol, glycerol, or a mixture thereof.

In a specific example, the constitutional unit (a2) derived from a diol may include at least one of ethylene glycol, propylene glycol, and butylene glycol in an amount of 10 mol% or more with respect to the total mol% of the corresponding constitutional unit (a2). Specifically, it may be included in a range of 20 to 70 mol%.

The polyester resin according to the present invention is not particularly limited in terms of its structure, component, and/or composition, as long as it includes the constitutional unit (a1) derived from a dicarboxylic acid, the constitutional unit (a2) derived from a diol, and the constitutional unit (a3) represented by Chemical Formula 2 described above.

As an example, the polyester resin may be a thermoplastic polyester and copolyester resin, and specifically may be in the form of a polyethylene terephthalate resin, a polybutylene terephthalate resin, a polypropylene terephthalate resin, or a combination thereof. Preferably, it may be a polybutylene terephthalate (PBT) resin.

The polyester resin of the present invention may exhibit flame retardant effects and polymerization degree improvement effects by including the constitutional unit (a3) represented by Chemical Formula 2. In particular, by adjusting a content ratio among the constitutional unit (a1) derived from a dicarboxylic acid, the constitutional unit (a2) derived from a diol, and the constitutional unit (a3) represented by Chemical Formula 2 to a predetermined ratio, improvement of flame retardancy and enhancement of the polymerization degree of the final polyester resin may be optimized.

In a specific example, the constitutional unit (a3) represented by Chemical Formula 2 may be included in an amount in a range from 0.5 to 30 parts by weight, specifically in a range of 0.5 to 20 parts by weight, with respect to 100 parts by weight of the constitutional unit (a1) derived from a dicarboxylic acid. In such a case, a content ratio of the constitutional unit (a1) derived from a dicarboxylic acid and the constitutional unit (a2) derived from a diol is not particularly limited and may be appropriately adjusted within a range known in the art. For example, a content of the diol may be variably added in an amount ranging from 1.1 to 1.7 equivalents relative to that of the dicarboxylic acid to proceed with polymerization.

When a content ratio between each constitutional unit constituting the polyester resin of the present invention falls within the above-described range, unreacted substances in an esterification reaction and a polycondensation reaction may be minimized, thereby increasing a yield of the polyester resin, and significantly improving flame retardancy and physical stability of the prepared polyester resin.

The polyester resin of the present invention including the above-described constitutional unit (a1) derived from a dicarboxylic acid, the constitutional unit (a2) derived from a diol, and the constitutional unit (a3) represented by Chemical Formula 2, and having an optimized content ratio among them may exhibit excellent flame retardant effect due to the phosphorus (P) atom contained in the resin itself, although a separate flame retardant is not included, and due to the phosphorus containing oligomer participating in the polycondensation reaction, the degree of polymerization may be improved and the molecular weight may be increased, thereby achieving improvement in physical stability of the final resin.

In a specific example, a content of phosphorus (P) atoms contained in the polyester resin may be in a range of 10 to 10,000 ppm.

In another specific example, the polyester resin may have a melt index (MI) in a range of 10 to 30 g/10min (with respect to 235°C), and specifically in a range of 12 to 25 g/10min. Furthermore, a weight average molecular weight (Mw) may be in a range of 10,000 to 100,000 g/mol, specifically in a range of 30,000 to 100,000 g/mol, and more specifically in a range of 40,000 to 80,000 g/mol. A melting point (Tₘ) measured by differential scanning calorimetry (DSC) may be in a range of 150 to 350°C, more specifically, in a range of 200 to 350°C.

In another specific example, the polyester resin may have an intrinsic viscosity (IV) in a range of 0.7 to 1.5 cP (25°C), specifically in a range of 0.8 to 1.3 cP (25°C). In addition, a glass transition temperature (Tg) may be in a range of 50 to 150°C, specifically, in a range of 80 to 130°C. A molecular weight distribution (PDI, Mw/Mn) may be in a range of 1 to 7, and specifically, in a range of 1 to 4.

### Method for preparing polyester resin

A polyester resin according to an embodiment of the present invention may be prepared according to a conventional preparing method known in the art, and is not particularly limited.

For example, it may be prepared by polymerizing a monomer and/or an oligomer capable of deriving the constitutional unit (a1), the constitutional unit (a2), and the constitutional unit (a3) in a known method such as melt polymerization, solid-state polymerization, solution polymerization, and slurry polymerization. In addition, the above-described polymerization method may be used in combination, and for example, it may be prepared by two-step polymerization in which, for example, a prepolymer is prepared by melt polymerization, and solid-state polymerization is performed again.

An embodiment of the preparing method may include preparing a polyester oligomer by esterifying a dicarboxylic acid and a diol; and mixing the polyester oligomer with a phosphorus (P) containing oligomer represented by Chemical Formula 2 and polycondensing the mixture.

Another embodiment of the preparing method may include mixing and esterifying a dicarboxylic acid, a diol, and a phosphorus (P) containing oligomer represented by Chemical Formula 2, followed by polycondensation.

In the above-described esterification reaction and/or polymerization reaction step, conventional additives known in the art may be used. Examples of the applicable additives may include at least one of a catalyst for polymerization, a heat stabilizer, a chain extender, a light stabilizer, inorganic particles, and potassium hydroxide.

The catalyst for polymerization is not particularly limited, and a known catalyst used as a catalyst for polymerization of polyester may be used. Specific examples thereof may include metal salt catalysts such as magnesium acetate, stannous acetate, tetrabutyl titanate, lead acetate, sodium acetate, potassium acetate, and antimony trioxide; and organic compound catalysts including nitrogen-containing heterocyclic compounds, such as N-methylimidazole. An amount of the catalyst used is not particularly limited and may be appropriately adjusted within a range known in the art.

The heat stabilizer may use a conventional stabilizer known in the art, and may include, for example, trimethyl phosphate, triethyl phosphate, tributyl phosphate, tributoxyethyl phosphate, tricresyl phosphate, triaryl phosphate isopropylated, hydroquinone bis-diphenyl phosphate, or mixtures thereof.

In addition to the above-described components, the present invention may further include any other additives commonly applied to the preparing of polyester resins within a range that does not impair the effects of the present invention. As examples of applicable additives, at least one of antifoaming agents, antioxidants, lubricants, hydrolysis stabilizers, release agents, pigments, antistatic agents, crosslinking agents, processing aids, anti-drip agents, anti-wear agents, surface activators, particulate fillers, gloss improvers, viscosity modifiers, and coupling agents may be appropriately added.

In addition, conditions of the ester reaction step and/or the polycondensation reaction step are also not particularly limited, and may be appropriately adjusted within a range known in the art.

### Thermoplastic resin composition

Another example of the present invention is a thermoplastic resin composition including the polyester resin described above.

The polyester resin is not particularly limited in terms of its component and/or composition, as long as it includes the constitutional unit (a1) derived from a dicarboxylic acid, the constitutional unit (a2) derived from a diol, and the constitutional unit (a3) represented by Chemical Formula 2 described above. As an example, a thermoplastic polyester and copolyester resin may be used, and specifically, a polyethylene terephthalate resin, a polybutylene terephthalate resin, a polypropylene terephthalate resin, or a combination thereof may be used.

The thermoplastic resin composition according to the present invention may further include a conventional resin known in the art other than the aforementioned polyester resin. For example, polyolefin resins such as polyethylene and polypropylene, cycloolefin polymers, vinyl-based resins such as polyvinyl chloride, (meth)acrylic resins such as polyacrylate, polymethacrylate and polymethylmethacrylate, polyphenylene ether resins, polyacetal resins, polyamide resins, imide-based resins such as polyimide and polyetherimide, polystyrene-based resins such as polystyrene, high-impact polystyrene, AS resins and ABS resins, thermosetting resins such as epoxy resins, cellulose resins, polyetheretherketone resins, fluororesins, and polycarbonate resins may be included.

In addition, in the present invention, within the range that does not impair the effect of the invention, an additive suitable for the intended use or effect may be further included. Examples of applicable additives may include, but not limited to, one or more selected from: fillers, colorants, pigments, dispersants, plasticizers, antioxidants, curing agents, flame retardants, heat stabilizers, UV absorbers, antistatic agents, leveling agents, surfactants, lubricants, antifrictions, and chain extenders.

The thermoplastic resin composition according to the present invention may be prepared according to a conventional method known in the art, for example, after appropriately mixing a polyester resin, other resins or additives, the mixture may be melt-kneaded using Banbury mixer, kneader, uniaxial or double-axial extruder.

### Molded article

Another example of the present invention is a molded article including the polyester resin described above.

A shape of the molded article may be appropriately changed according to the usage, and may be, for example, a film shape, a plate shape, and a fibrous shape. However, the present invention is not particularly limited thereto. Specific examples of the molded article may include a film, a sheet, a bottle, a liquid crystal display, a hologram, a filter, a dielectric film, an insulating material for an electric wire, an insulating tape, a fiber-reinforced composite, and other injection-molded articles, but the present invention is not limited thereto.

The molded article according to the present invention may further include a conventional resin known in the art other than the polyester resin, within a range that does not impair the effects of the present invention. For example, polyolefin resins such as polyethylene and polypropylene, cycloolefin polymers, vinyl-based resins such as polyvinyl chloride, (meth)acrylic resins such as polyacrylate, polymethacrylate and polymethylmethacrylate, polyphenylene ether resins, polyacetal resins, polyamide resins, imide-based resins such as polyimide and polyetherimide, polystyrene-based resins such as polystyrene, high-impact polystyrene, AS resins and ABS resins, thermosetting resins such as epoxy resins, cellulose resins, polyetheretherketone resins, fluororesins, and polycarbonate resins may be included.

In addition, in the present invention, in a range that does not impair the effects of the present invention, conventional additives such as colorants, dispersants, plasticizers, antioxidants, curing agents, flame retardants, heat stabilizers, UV absorbers, antistatic agents, surfactants may be further included.

The molded article according to the present invention may be manufactured according to a conventional method known in the art, for example, a mixture including a polyester resin and other resins or additives may be subjected to press molding, foam molding, injection molding, extrusion molding, and punching molding to obtain the molded article. In such a case, the mixture may be obtained in a manner where after appropriately mixing a polyester resin, other resins or additives, the mixture may be melt-kneaded using Banbury mixer, kneader, and uniaxial or double-axial.

In a specific example, the molded article may be a film.

The film may be manufactured by a conventional method known in the art, such as inflation molding, extrusion molding such as melt extrusion molding, and a solution casting method. The manufactured film may be a single-layer film made of a polyester resin, or a single-layer or multi-layer film including different materials.

In another specific example, the molded article may be a fiber.

The fiber may be manufactured by conventional methods known in the art, such as melt spinning, and solution spinning. The manufactured fiber may be in the form of being made of a polyester resin or mixed with a heterogeneous resin.

The polyester resin, the thermoplastic resin composition, and the molded article according to the present invention described above not only have excellent flame retardancy due to the phosphorus (P) component included in the resin itself, but also may secure the physical stability of the polyester resin by controlling the polymerization degree, and thus it may be usefully applicable in the manufacture of molded articles such as housings and connectors of electronic/electrical and automobile parts. However, it is not limited to the above-described usage, and it is applicable to all of the various technical fields and processes to which the conventional polyester resin is applied.

Hereinafter, the present invention will be described in detail through examples. However, the following examples only illustrate the present invention, and the present invention is not limited by the following examples.

### Synthesis Examples 1 to 5: Preparation of phosphorus containing oligomers

### Synthesis Example 1

200 g of 2-carboxyethylphenylphosphinic acid and 115 g of ethylene glycol were added to a reactor, a temperature was raised to 150°C, and 0.2 g of tetrabutyl titanate was then added. A trap was installed to remove water generated after reaction. When the reaction was completed after 12 hours, the trap was removed, and while maintaining the temperature at 100°C, a pressure was gradually reduced and a remaining ethylene glycol was removed while maintaining a vacuum degree to 1 torr or lower, such that an oligomer 1 (yield: 85%, Mw: 1,500 g/mol) represented by the following Chemical Formula 3a was prepared.

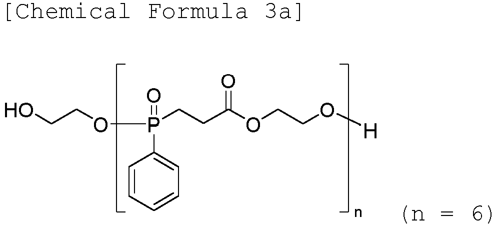

### Synthesis Example 2

An oligomer 2 (yield: 81%, Mw: 1,180 g/mol) represented by the following Chemical Formula 3b was prepared in the same manner as in Synthesis Example 1, except that 115 g of ethylene glycol was changed to 150 g of 1,4-butanediol.

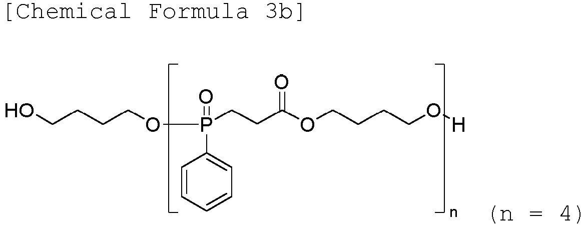

### Synthesis Example 3

An oligomer 3 (yield: 86%, Mw: 1,350 g/mol) represented by the following Chemical Formula 3c was prepared in the same manner as in Synthesis Example 1, except that 115 g of ethylene glycol was changed to 120 g of hydroquinone.

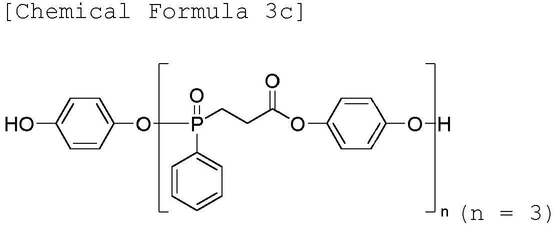

### [Synthesis Example 4]

An oligomer 4 (yield: 71 %, Mw: 1,550 g/mol) represented by the following Chemical Formula 3d was prepared in the same manner as in Synthesis Example 1, except that 115 g of ethylene glycol was changed to 125 g of cyclohexanediol.

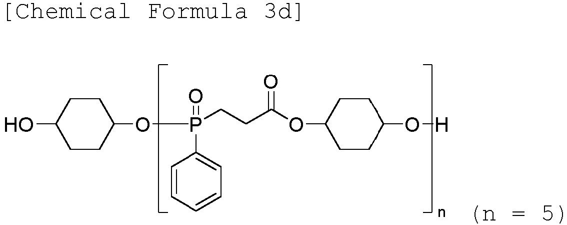

### Synthesis Example 5

An oligomer 5 (yield: 87 %, Mw: 1,750 g/mol) represented by the following Chemical Formula 3e was prepared in the same manner as in Synthesis Example 1, except that 115 g of ethylene glycol was changed to 120 g of cyclohexanedimethanol.

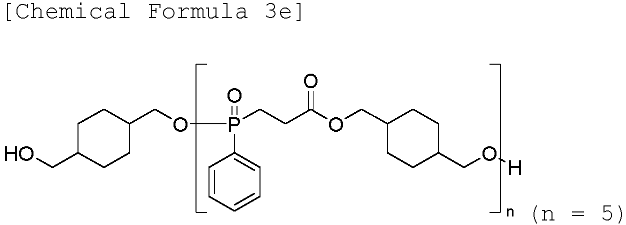

### Examples 1 to 8: Preparation of polyester resin products

### Example 1

1940 g of dimethyl terephthalate, 1,350 g of 1,4-butanediol, and 1.16 g of tetrabutyl titanate were added to a reactor, and when a temperature reached 140°C at atmospheric pressure, a transesterification reaction was carried out while refluxing methanol and gradually increasing the temperature to 200°C. When 95% of a theoretical amount of methanol was discharged, 3 parts by weight of the oligomer 1 prepared in Synthesis Example 1 was added with respect to the total weight of dimethyl terephthalate, and after completion of the transesterification reaction, a product was transferred to a polycondensation reactor, and 0.58 g of tetrabutyl titanate was added, and while maintaining the temperature at 250°C, a pressure was gradually reduced to maintain a vacuum degree of 0.3 torr or lower to proceed with a polycondensation reaction, and when a desired degree of polymerization was reached, nitrogen was injected to release the vacuum, and then, a polymer was discharged and cooled to obtain a final product 1. Physical properties of the manufactured final product are shown in Table 1 below.

### Example 2

A final product 2 was obtained by polymerization in the same manner as in Example 1, except that an add amount of the oligomer 1 was changed from 3 parts by weight to 5 parts by weight.

### Example 3

A final product 3 was obtained by polymerization in the same manner as in Example 1, except that oligomer 2 was used instead of oligomer 1.

### Example 4

A final product 4 was obtained by polymerization in the same manner as in Example 1, except that oligomer 2 was used instead of oligomer 1 and that an add amount of the oligomer 2 was changed to 5 parts by weight.

### Example 5

A final product 5 was obtained by polymerization in the same manner as in Example 1, except that oligomer 3 was used instead of oligomer 1.

### Example 6

A final product 6 was obtained by polymerization in the same manner as in Example 1, except that oligomer 3 was used instead of oligomer 1 and that an add amount of oligomer 3 was changed to 5 parts by weight.

### Example 7

A final product 7 was obtained by polymerization in the same manner as in Example 1, except that oligomer 4 was used instead of oligomer 1 and that an add amount of oligomer 4 was changed to 5 parts by weight.

### Example 8

A final product 8 was obtained by polymerization in the same manner as in Example 1, except that oligomer 5 was used instead of oligomer 1, and that an amount of oligomer 5 was changed to 5 parts by weight.

### Comparative Example 1

### 1-1. Phosphorus Containing Monomer Preparation

100 g of 2-carboxyethylphenylphosphinic acid, 200 g of bromoethanol, and 130 g of potassium carbonate were added to a reactor, and a temperature was raised to reflux. When the reaction was completed after 24 hours, layers are separated using 500 ml of chloroform and 500 ml of water, and after extracting a chloroform layer, magnesium sulfate was added to remove a residual water and a solvent was removed, and accordingly, a monomer (yield: 47%, n = 1) of Comparative Example 1 represented by the following Chemical Formula A was prepared.

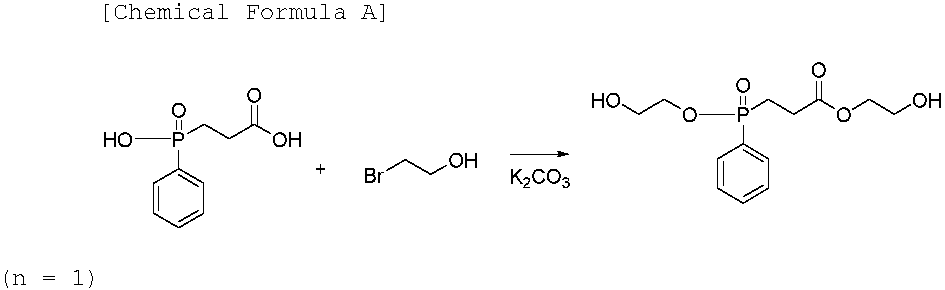

### 1-2. Polyester resin product manufacturing

A final product of Comparative Example 1 was obtained by polymerization in the same manner as in Example 1, except that monomer A was used instead of oligomer 1.

### Comparative Example 2

### 2-1. Preparation of phosphorus containing oligomers

An oligomer (yield: 71%, Mw: 1,150 g/mol) represented by the following Chemical Formula B was prepared in the same manner as in Synthesis Example 1, except that 2-carboxyethylphenyl phosphinic acid was changed to 100 g of methyl phosphinic acid.

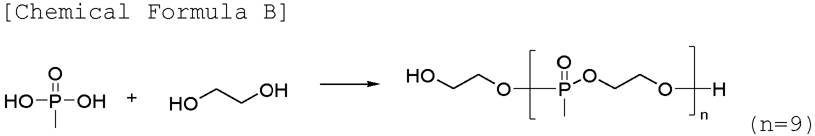

### 2-2. Polyester resin product manufacturing

A final product of Comparative Example 2 was obtained by polymerization in the same manner as in Example 1, except that oligomer B was used instead of oligomer 1.

### Experimental example: evaluation of physical properties

The physical properties of the final polyester resin products prepared in Examples 1 to 8 and Comparative Examples 1 to 2 were evaluated as follows, and the results are shown in Table 1 below.

Method for evaluating physical properties
(1) Weight average molecular weight: Agilent 1200 series was used, and it was measured by PC standard.
(2) Melt index (MI): measurements were made according to ASTM D1238 (235°C, 2.16kg condition) test standard.
(3) Melting point (Tₘ): by using differential scanning calorimetry (METTLER TOLEDO DSC), a temperature was raised from 15°C to 400°C to measure a melting point (Tₘ).
(4) Flame retardant grade: a flame retardancy was measured according to the UL94 V test method. In this case, a specimen having a thickness of 0.8 mm was used.
(5) Intrinsic viscosity (IV): measurements were made according to ASTM D2196 test standard.

**[Table 1]**

| Category | Phosphorus containing compound | | weight average molecular weight (Mw, g/mol) | MI (g/10min ) | Tₘ (°C) | flame retard ant grade | intrin sic viscos ity (IV) |
|---|---|---|---|---|---|---|---|
| | Phosphor us Containi ng Oligomer /Monomer | Use amount (parts by weight ) | | | | | |
| Ex. 1 | Oligomer 1 | 3 | 50,500 | 15.6 | 260 | V-0 | 1.1 |
| Ex. 2 | Oligomer 1 | 5 | 62,300 | 17.3 | 259 | V-0 | 0.9 |
| Ex. 3 | Oligomer 2 | 3 | 49,500 | 12.7 | 261 | V-0 | 0.9 |
| Ex. 4 | Oligomer 2 | 5 | 50,300 | 15.9 | 253 | V-0 | 1.0 |
| Ex. 5 | Oligomer 3 | 3 | 49,700 | 13.3 | 266 | V-0 | 1.1 |
| Ex. 6 | Oligomer 3 | 5 | 61,000 | 17.1 | 258 | V-0 | 0.9 |
| Ex. 7 | Oligomer 4 | 5 | 60,600 | 16.7 | 260 | V-1 | 0.9 |
| Ex. 8 | Oligomer 5 | 5 | 67,500 | 18.3 | 257 | V-1 | 1.0 |
| Comp. Ex. 1 | Monomer A | 5 | 9,100 | 37.3 | 190 | V-2 | 0.6 |
| Comp. Ex. 2 | Oligomer B | 5 | 4,600 | - | - | - | - |

As shown in Table 1, it was appreciated that the polyester-based resin products of Examples 1 to 8 may exhibit excellent flame retardancy, even though they use a relatively small amount of phosphorus (P) containing oligomer, and that the polyester-based resin products of Examples 1 to 8 may prevent degradation of physical properties such as viscosity, melting temperature, processability, and molecular weight of the final polyester resin and ensure physical stability as they may contribute to polymerization reaction unlike conventional phosphorus flame retardants.

## Claims

1. A phosphorus containing oligomer represented by the following Chemical Formula 1: 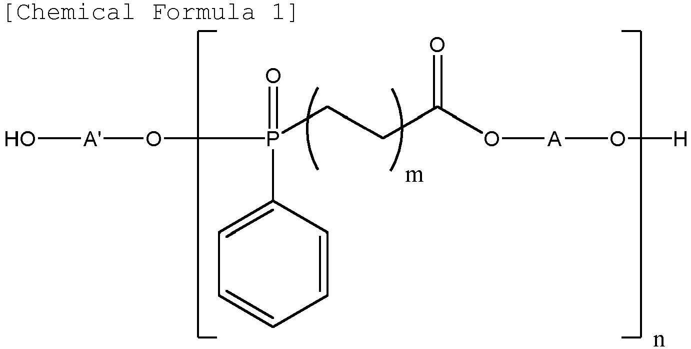 wherein in Chemical Formula 1,
A and A' are the same as or different from each other, and are each independently selected from the group consisting of a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene groups having 5 to 60 nuclear atoms, each of which are independently unsubstituted or substituted with one or more substituents selected from the group consisting of deuterium (D), halogen, a cyano group, a nitro group, a C₁ to C₄₀ alkyl group, a C₆ to C₆₀ aryl group, and a heteroaryl group having 5 to 60 nuclear atoms, and when the substituents are plural in number, the substituents are the same as or different from each other,
m is an integer in a range from 1 to 10, and
n is an integer in a range from 2 to 50.

2. The phosphorus containing oligomer of claim 1, wherein the phosphorus containing oligomer represented by Chemical Formula 1 comprises at least one selected from the group consisting of Chemical Formula 1A and Chemical Formula 1B: 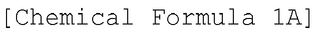 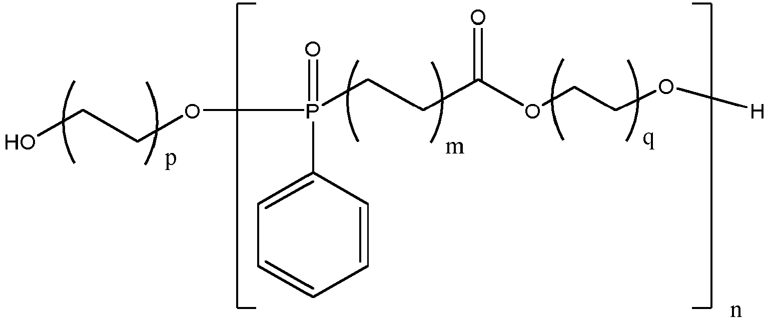 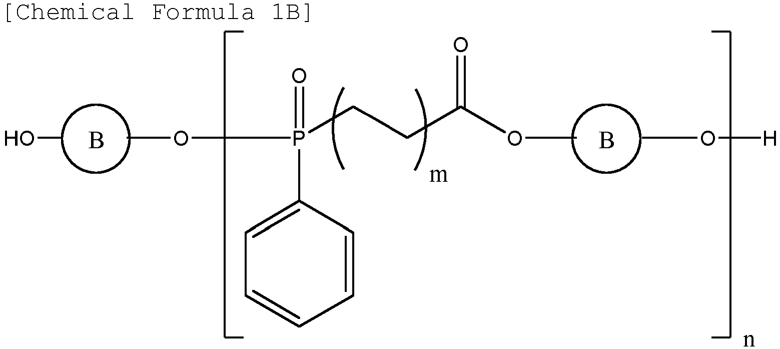 in the above Chemical Formula,
ring B is one selected from the group consisting of a monocyclic or polycyclic alicyclic ring, a heteroalicyclic ring, an aromatic ring, and a heteroaromatic ring,
p and q are each an integer from 1 to 10, and
m and n are the same as defined in Chemical Formula 1.

3. The phosphorus containing oligomer of claim 1, wherein A and A' are each independently selected from the group consisting of a C₁ to C₁₀ alkylene group, a C₃ to C₁₂ cycloalkylene group, a C₆ to C₂₀ arylene group, and a heteroarylene group having 5 to 60 nuclear atoms, and
A and A' are the same as each other.

4. The phosphorus containing oligomer of claim 1, wherein the phosphorus containing oligomer comprises at least one selected from compounds represented by the following Chemical Formulas: 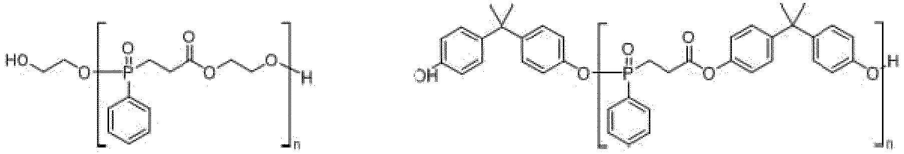 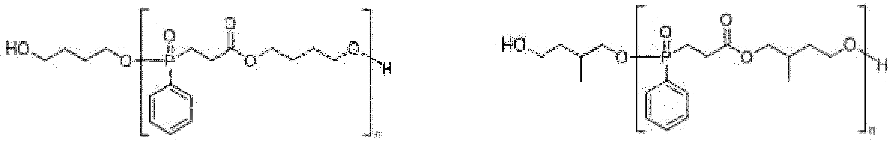 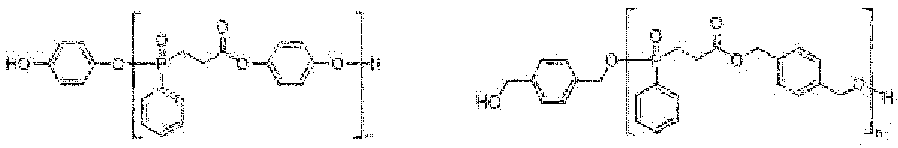 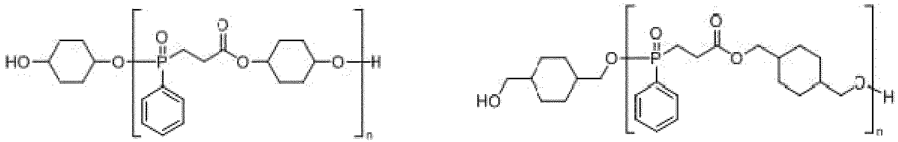 wherein in the above Chemical Formula,
n is the same as defined in claim 1.

5. The phosphorus containing oligomer of claim 1, wherein the phosphorus (P) containing oligomer has a weight average molecular weight (Mw) in a range of 500 to 3,000 g/mol measured as disclosed in the specification.

6. A polyester resin comprising:
a constitutional unit (a1) derived from a dicarboxylic acid;
a constitutional unit (a2) derived from a diol; and
a constitutional unit (a3) derived from the phosphorus containing oligomer according to any one of claims 1 to 5.

7. The polyester resin of claim 6, wherein the constitutional unit (a3) is represented by the following Chemical Formula 2: 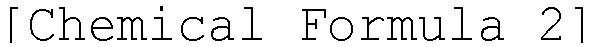 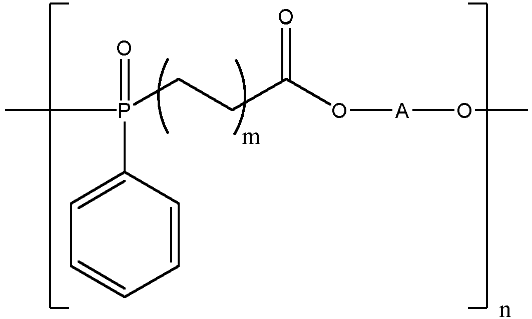 wherein in Chemical Formula 2,
A is selected from the group consisting of a C₁ to C₄₀ alkylene group, a C₂ to C₄₀ alkenylene group, a C₂ to C₄₀ alkynylene group, a C₃ to C₄₀ cycloalkylene group, a heteroalkylene group having 1 to 40 nuclear atoms, a heterocycloalkylene group having 3 to 40 nuclear atoms, a C₆ to C₆₀ arylene group, and a heteroarylene group having 5 to 60 nuclear atoms, each of which is independently unsubstituted or substituted with one or more substituents selected from the group consisting of deuterium (D), halogen, a cyano group, a nitro group, a C₁ to C₄₀ alkyl group, a C₆ to C₆₀ aryl group, and a heteroaryl group having 5 to 60 nuclear atoms, and when a plurality of the substituents is comprised, the substituents are the same as or different from each other,
m is an integer in a range from 1 to 10, and
n is an integer in a range from 2 to 50;

8. The polyester resin of claim 7, wherein the constitutional unit (a3) represented by Chemical Formula 2 comprises at least one constitutional unit selected from Chemical Formula 2A and Chemical Formula 2B: 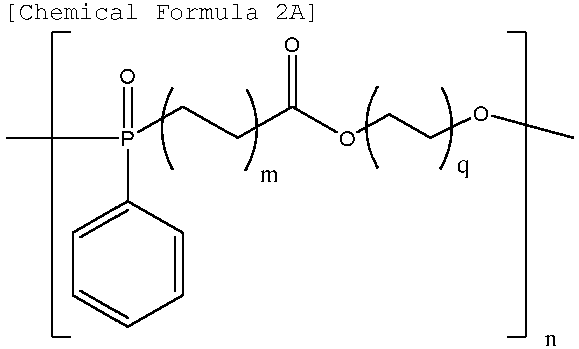 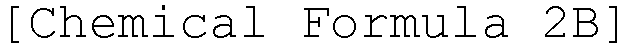 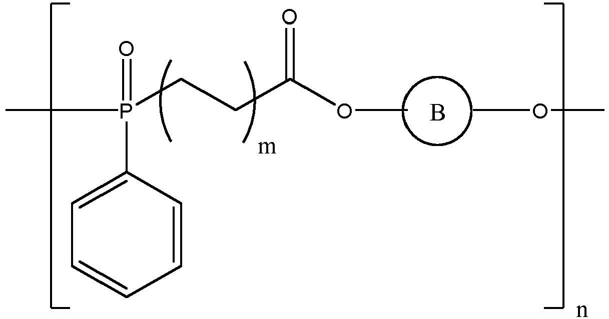 in the above Chemical Formulas 2A and 2B,
ring B is selected from: a monocyclic or polycyclic alicyclic ring, a heteroalicyclic ring, an aromatic ring and a heteroaromatic ring,
q is an integer in a range from 1 to 10, and
m and n are each as defined in claim 7.

9. The polyester resin of claim 6, wherein the constitutional unit (a3) is comprised in an amount in a range from 0.5 to 30 parts by weight with respect to 100 parts by weight of the constitutional unit (a1) derived from a dicarboxylic acid.

10. The polyester resin of claim 6, wherein a phosphorus (P) atom content is in a range of 10 to 10,000 ppm.

11. The polyester resin of claim 6, wherein the polyester resin has a melt index (MI), measured as disclosed in the specification according to ASTM D1238 (235°C, 2.16kg condition) test standard, in a range of 10 to 30 g/10min at 235°C,
wherein the polyester resin has a weight average molecular weight (Mw) measured as disclosed in the specification in a range of 10,000 to 100,000 g/mol,
wherein the polyester resin has a melting point (Tₘ) measured by differential scanning calorimetry (DSC) in a range of 150 to 350°C, and
wherein the polyester resin has an intrinsic viscosity (IV), measured as disclosed in the specification according to ASTM D2196 test standard, in a range of of 0.7 to 1.5 cP at 25°C.

12. The polyester resin of claim 6, wherein the polyester resin is polybutylene terephthalate (PBT).

13. A thermoplastic resin composition comprising the polyester resin of claim 6.

14. A molded article comprising the polyester resin of claim 6.

15. The molded article of claim 14, wherein the molded article is a film or a fiber.

## Patentansprüche

1. Phosphorhaltiges Oligomer, dargestellt durch die folgende chemische Formel 1: 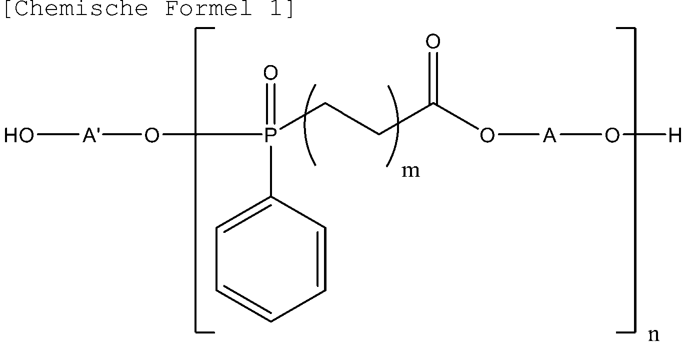 wobei in der chemischen Formel 1
A und A' gleich oder verschieden voneinander sind und jeweils unabhängig ausgewählt sind aus der Gruppe, bestehend aus einer C₁ - bis C₄₀ -Alkylengruppe, einer C₂ - bis C₄₀ - Alkenylengruppe, einer C₂ - bis C₄₀ -Alkinylengruppe, einer C₃ - bis C₄₀ -Cycloalkylengruppe, einer Heteroalkylengruppe mit 1 bis 40 Kernatomen, einer Heterocycloalkylengruppe mit 3 bis 40 Kernatomen, einer C₆ - bis C₆₀ -Arylengruppe und einer Heteroarylengruppe mit 5 bis 60 Kernatomen, von denen jede unabhängig unsubstituiert oder substituiert ist mit einem oder mehreren Substituenten, ausgewählt aus der Gruppe, bestehend aus Deuterium (D), Halogen, einer Cyanogruppe, einer Nitrogruppe, einer C₁ - bis C₄₀ -Alkylgruppe, einer C₆ - bis C₆₀ -Arylgruppe und einer Heteroarylgruppe mit 5 bis 60 Kernatomen, und wenn die Substituenten mehrfach vorhanden sind, die Substituenten gleich oder verschieden voneinander sind,
m eine ganze Zahl in einem Bereich von 1 bis 10 ist und
n eine ganze Zahl in einem Bereich von 2 bis 50 ist.

2. Phosphorhaltiges Oligomer nach Anspruch 1, wobei das phosphorhaltige Oligomer, dargestellt durch die chemische Formel 1, mindestens eines umfasst, ausgewählt aus der Gruppe, bestehend aus der chemischen Formel 1A und der chemischen Formel 1B: 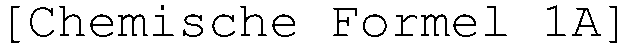 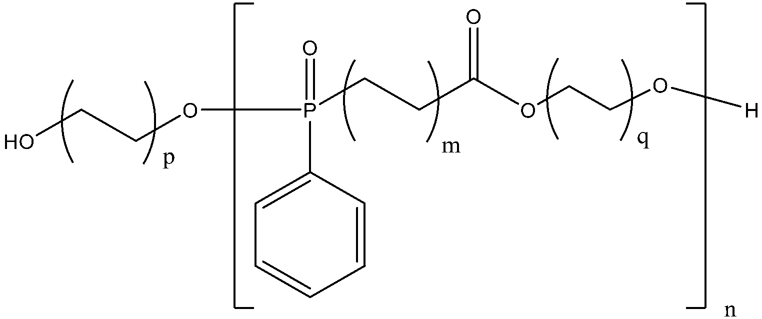 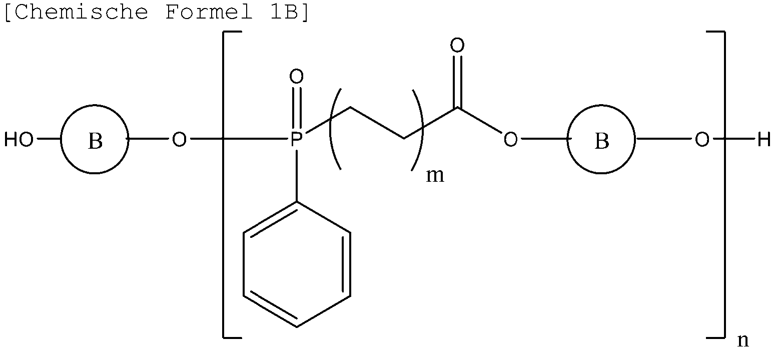 wobei in der obigen chemischen Formel
Ring B einer ist, ausgewählt aus der Gruppe, bestehend aus einem monocyclischen oder polycyclischen alicyclischen Ring, einem heteroalicyclischen Ring, einem aromatischen Ring und einem heteroaromatischen Ring,
p und q jeweils eine ganze Zahl von 1 bis 10 sind und
m und n dieselben wie in der chemischen Formel 1 definiert sind.

3. Phosphorhaltiges Oligomer nach Anspruch 1, wobei A und A' jeweils unabhängig ausgewählt sind aus der Gruppe, bestehend aus einer C₁ - bis C₁₀ -Alkylengruppe, einer C₃ - bis C₁₂ - Cycloalkylengruppe, einer C₆ - bis C₂₀ -Arylengruppe und einer Heteroarylengruppe mit 5 bis 60 Kernatomen, und
A und A' dieselben wie einander sind.

4. Phosphorhaltiges Oligomer nach Anspruch 1, wobei das phosphorhaltige Oligomer mindestens eines umfasst, ausgewählt aus Verbindungen, dargestellt durch die folgenden chemischen Formeln: 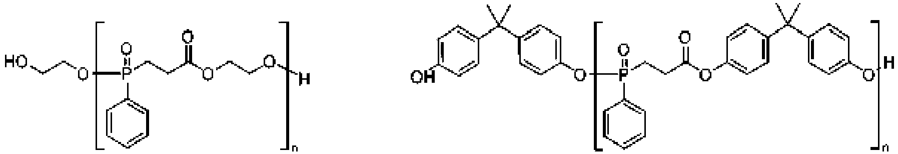 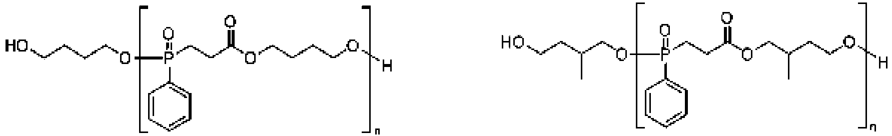 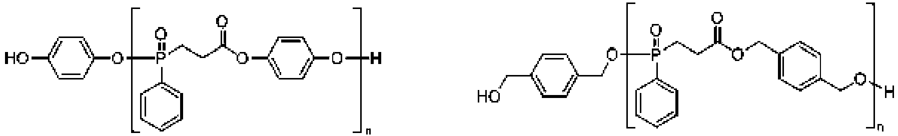 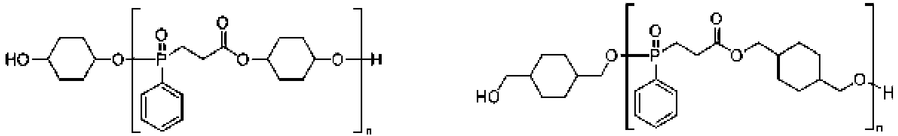 wobei in der obigen chemischen Formel
n dasselbe wie in Anspruch 1 definiert ist.

5. Phosphorhaltiges Oligomer nach Anspruch 1, wobei das phosphorhaltige Oligomer (P) ein gewichtsmittleres Molekulargewicht (Mw) in einem Bereich von 500 bis 3.000 g/mol aufweist, wie in der Beschreibung offenbart gemessen.

6. Polyesterharz, umfassend:
eine Konstitutionseinheit (a1), die von einer Dicarbonsäure abgeleitet ist;
eine Konstitutionseinheit (a2), die von einem Diol abgeleitet ist; und
eine Konstitutionseinheit (a3), die von dem phosphorhaltigen Oligomer nach einem der Ansprüche 1 bis 5 abgeleitet ist.

7. Polyesterharz nach Anspruch 6, wobei die Konstitutionseinheit (a3) durch die folgende chemische Formel 2 dargestellt ist: 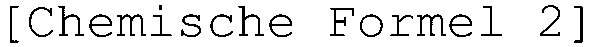 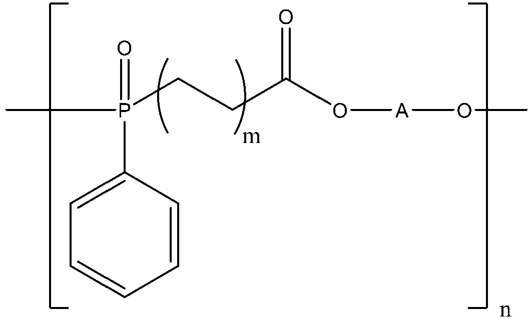 wobei in der chemischen Formel 2
A ausgewählt ist aus der Gruppe, bestehend aus einer C₁ - bis C₄₀ -Alkylengruppe, einer C₂ - bis C₄₀ -Alkenylengruppe, einer C₂ - bis C₄₀ -Alkinylengruppe, einer C₃ - bis C₄₀ - Cycloalkylengruppe, einer Heteroalkylengruppe mit 1 bis 40 Kernatomen, einer Heterocycloalkylengruppe mit 3 bis 40 Kernatomen, einer C₆ - bis C₆₀ -Arylengruppe und einer Heteroarylengruppe mit 5 bis 60 Kernatomen, von denen jede unabhängig unsubstituiert oder substituiert ist mit einem oder mehreren Substituenten, ausgewählt aus der Gruppe, bestehend aus Deuterium (D), Halogen, einer Cyanogruppe, einer Nitrogruppe, einer C₁ - bis C₄₀ -Alkylgruppe, einer C₆ - bis C₆₀ -Arylgruppe und einer Heteroarylgruppe mit 5 bis 60 Kernatomen, und wenn mehrere der Substituenten enthalten sind, die Substituenten gleich oder verschieden voneinander sind,
m eine ganze Zahl in einem Bereich von 1 bis 10 ist und
n eine ganze Zahl in einem Bereich von 2 bis 50 ist.

8. Polyesterharz nach Anspruch 7, wobei die Konstitutionseinheit (a3), dargestellt durch die chemische Formel 2, mindestens eine Konstitutionseinheit umfasst, ausgewählt aus der chemischen Formel 2A und der chemischen Formel 2B: 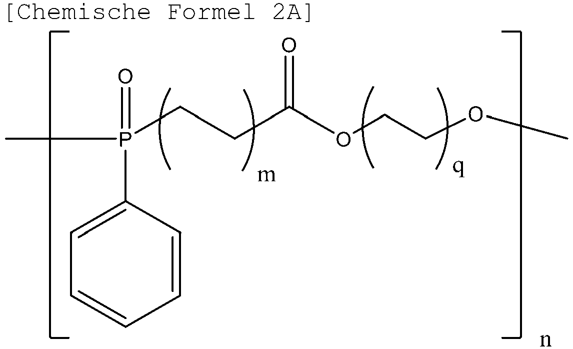 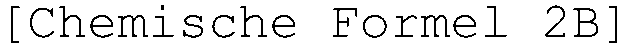 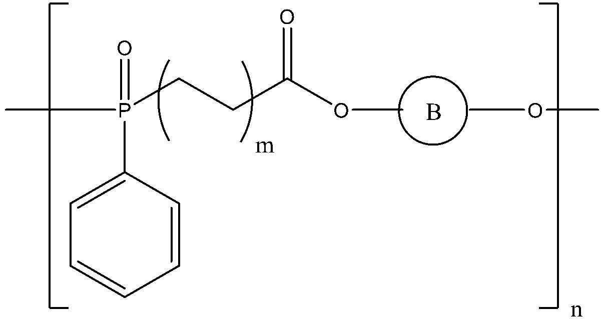 wobei in den obigen chemischen Formeln 2A und 2B
Ring B ausgewählt ist aus: einem monocyclischen oder polycyclischen alicyclischen Ring, einem heteroalicyclischen Ring, einem aromatischen Ring und einem heteroaromatischen Ring,
q eine ganze Zahl in einem Bereich von 1 bis 10 ist und
m und n jeweils wie in Anspruch 7 definiert sind.

9. Polyesterharz nach Anspruch 6, wobei die Konstitutionseinheit (a3) in einer Menge in einem Bereich von 0,5 bis 30 Gewichtsteilen, bezogen auf 100 Gewichtsteile der Konstitutionseinheit (a1), die von einer Dicarbonsäure abgeleitet ist, enthalten ist.

10. Polyesterharz nach Anspruch 6, wobei ein Gehalt an Phosphoratomen (P) in einem Bereich von 10 bis 10.000 ppm liegt.

11. Polyesterharz nach Anspruch 6, wobei das Polyesterharz einen Schmelzindex (MI), gemessen wie in der Beschreibung gemäß dem Teststandard ASTM D1238 (235 °C, 2,16 kg-Bedingung) offenbart, in einem Bereich von 10 bis 30 g/10 min bei 235 °C aufweist,
wobei das Polyesterharz ein gewichtsmittleres Molekulargewicht (Mw), gemessen wie in der Beschreibung offenbart, in einem Bereich von 10.000 bis 100.000 g/mol aufweist,
wobei das Polyesterharz einen Schmelzpunkt (Tₘ), gemessen durch Differentialscanningkalorimetrie (DSC), in einem Bereich von 150 bis 350 °C aufweist, und
wobei das Polyesterharz eine intrinsische Viskosität (IV), gemessen wie in der Beschreibung gemäß dem Teststandard ASTM D2196 offenbart, in einem Bereich von 0,7 bis 1,5 cP bei 25 °C aufweist.

12. Polyesterharz nach Anspruch 6, wobei das Polyesterharz Polybutylenterephthalat (PBT) ist.

13. Thermoplastische Harzzusammensetzung, umfassend das Polyesterharz nach Anspruch 6.

14. Formkörper, umfassend das Polyesterharz nach Anspruch 6.

15. Formkörper nach Anspruch 14, wobei der Formkörper eine Folie oder eine Faser ist.

## Revendications

1. Oligomère contenant du phosphore représenté par la Formule chimique 1 ci-après : 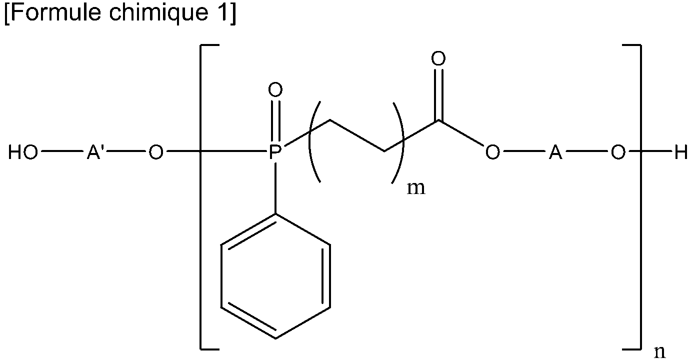 dans lequel, dans la Formule chimique 1,
A et A' sont identiques ou différents l'un de l'autre, et sont chacun indépendamment sélectionnés dans le groupe constitué d'un groupe cycloalkylène en C₁ à C₄₀, un groupe alkénylène en C₂ à C₄₀, un groupe alkynylène en C₂ à C₄₀, un groupe cycloalkylène en C₃ à C₄₀, un groupe hétéroalkylène ayant 1 à 40 atomes nucléaires, un groupe hétérocycloalkylène ayant 3 à 40 atomes nucléaires, un groupe arylène en C₆ à C₆₀, et un groupe hétéroarylène ayant 5 à 60 atomes nucléaires, dont chacun sont indépendamment non substitué ou substitué par un ou plusieurs substituants sélectionnés dans le groupe constitué d'un deutérium (D), un halogène, un groupe cyano, un groupe nitro, un groupe alkyle en C₁ à C₄₀, un groupe aryle en C₆ à C₆₀ et un groupe hétéroaryle ayant 5 à 60 atomes nucléaires et, quand les substituants sont une pluralité, les substituants sont identiques ou différents l'un de l'autre,
m est un nombre entier dans une plage de 1 à 10, et
n est un nombre entier dans une plage de 2 à 50.

2. Oligomère contenant du phosphore selon la revendication 1, dans lequel l'oligomère contenant du phosphore représenté par la Formule chimique 1 comprend un ou plusieurs éléments sélectionnés dans le groupe constitué de la Formule chimique 1A et la Formule chimique 1B : 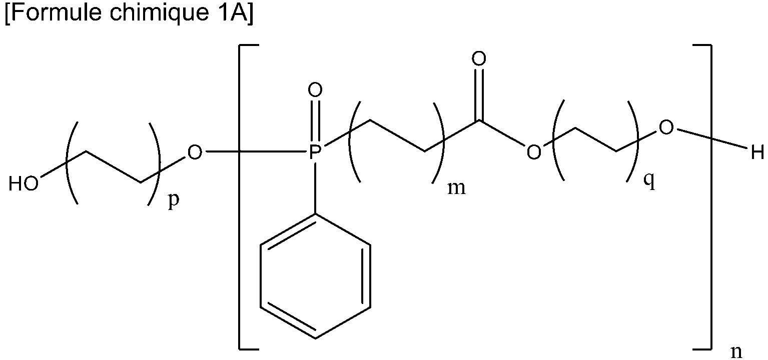 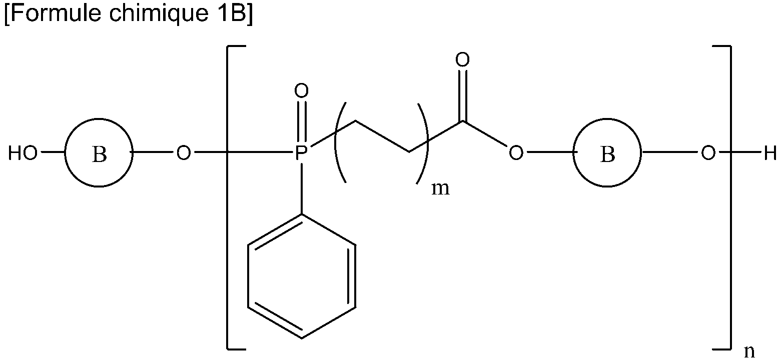 dans la Formule chimique ci-dessus,
le cycle B est sélectionné dans le groupe constitué d'un cycle alicyclique monocyclique ou polycyclique, un cycle hétéroalicyclique, un cycle aromatique et un cycle hétéroaromatique,
p et q sont chacun un nombre entier de 1 à 10, et
m et n sont identiques à ceux definis dans la Formule chimique 1.

3. Oligomère contenant du phosphore selon la revendication 1, dans lequel A et A' sont chacun indépendamment sélectionnés dans le groupe constitué d'un groupe alkylène en C₁ à C₁₀, un groupe cycloalkylène en C₃ à C₁₂, un groupe arylène en C₆ à C₂₀ et un groupe hétéroarylène ayant 5 à 60 atomes nucléaires, et
A et A' sont identiques l'un à l'autre.

4. Oligomère contenant du phosphore selon la revendication 1, dans lequel l'oligomère contenant du phosphore comprend un ou plusieurs éléments sélectionnées parmi des composés représentés par les Formules chimiques ci-après : 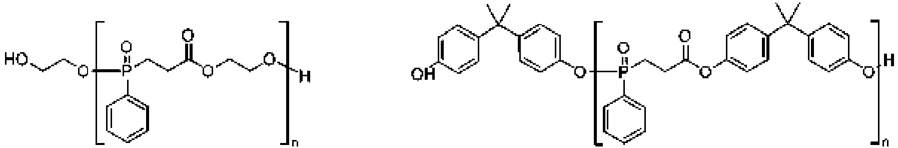 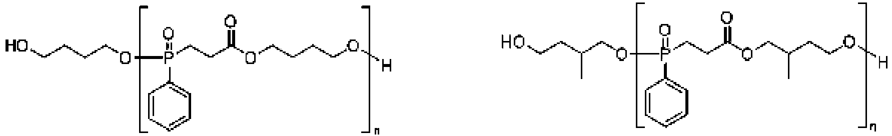 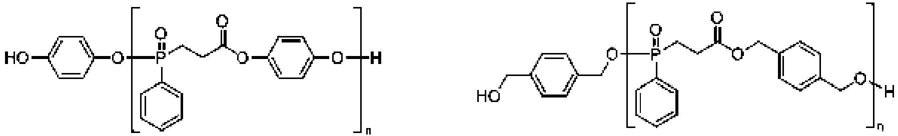 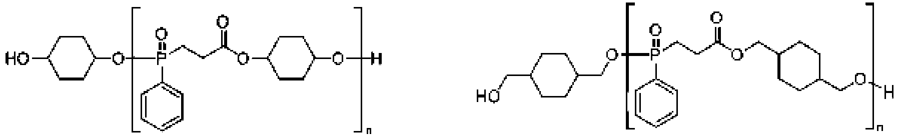 dans lequel, dans la Formule chimique ci-dessus,
n est identique à celui défini selon la revendication 1.

5. Oligomère contenant du phosphore selon la revendication 1, dans lequel l'oligomère contenant du phosphore (P) a un poids moléculaire moyen en poids (Mw) dans une plage de 500 à 3000 g/mol, mesuré comme décrit dans la spécification.

6. Résine polyester comprenant :
une unité constitutive (a1) dérivée d'un acide dicarboxylique ;
une unité constitutive (a2) dérivée d'un diol ; et
une unité constitutive (a3) dérivée de l'oligomère contenant du phosphore selon l'une quelconque des revendications 1 à 5.

7. Résine polyester selon la revendication 6, dans laquelle l'unité constitutive (a3) est représentée par la Formule chimique 2 ci-après : 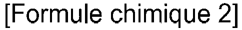 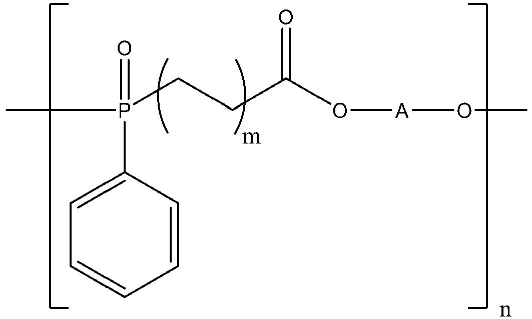 dans laquelle, dans la Formule chimique 2,
A est sélectionné dans le groupe constitué d'un groupe alkylène en C₁ à C₄₀, un groupe alkénylène en C₂ à C₄₀, un groupe alkynylène en C₂ à C₄₀, un groupe cycloalkylène en C₃ à C₄₀, un groupe hétéroalkylène ayant 1 à 40 atomes nucléaires, un groupe hétérocycloalkylène ayant 3 à 40 atomes nucléaires, un groupe arylène en C₆ à C₆₀, et un groupe hétéroarylène ayant 5 à 60 atomes nucléaires, dont chacun est indépendamment non substitué ou substitué par un ou plusieurs substituants sélectionnés dans le groupe constitué d'un deutérium (D), un halogène, un groupe cyano, un groupe nitro, un groupe alkyle en C₁ à C₄₀, un groupe aryle en C₆ à C₆₀, et un groupe hétéroaryle ayant 5 à 60 atomes nucléaires et, quand une pluralité des substituants sont compris, les substituants sont identiques ou différents l'un de l'autre,
m est un nombre entier dans une plage de 1 à 10, et
n est un nombre entier dans une plage de 2 à 50 ;

8. Résine polyester selon la revendication 7, dans laquelle l'unité constitutive (a3) représentée par la Formule chimique 2 comprend une ou plusieurs unités constitutives sélectionnées parmi la Formule chimique 2A et la Formule chimique 2B : 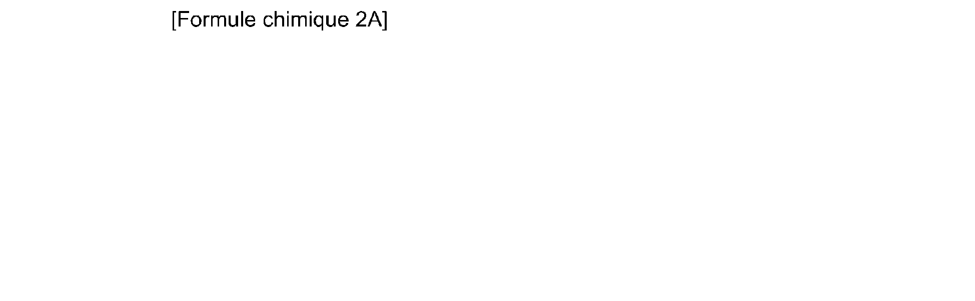 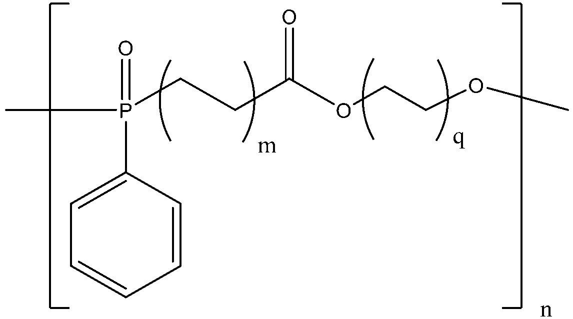 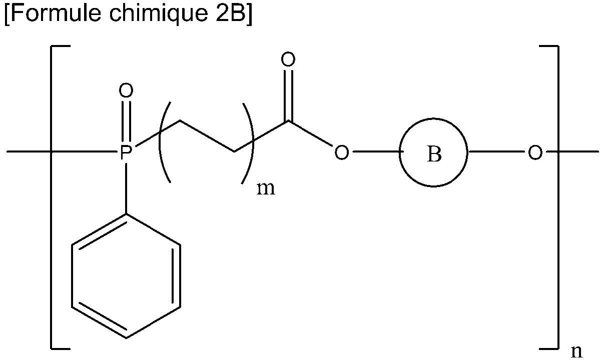 dans les Formules chimiques ci-dessus 2A et 2B,
le cycle B est sélectionné parmi : un cycle alicyclique monocyclique ou polycyclique, un cycle hétéroalicyclique, un cycle aromatique et un cycle hétéroaromatique,
q est un nombre entier dans une plage de 1 à 10, et
m et n sont chacun définis selon la revendication 7.

9. Résine polyester selon la revendication 6, dans laquelle l'unité constitutive (a3) est comprise dans une quantité dans une plage de 0,5 à 30 parties en poids pour 100 parties en poids de l'unité constitutive (a1) dérivée d'un acide dicarboxylique.

10. Résine polyester selon la revendication 6, dans laquelle une teneur en atomes de phosphore (P) est dans une plage de 10 à 10 000 ppm.

11. Résine polyester selon la revendication 6, dans laquelle la résine polyester a un indice de fusion (MI), mesuré comme décrit dans la spécification selon la norme d'essai ASTM D1238 (sous condition de 235°C, 2,16 kg), dans une plage de 10 à 30 g/10min at 235°C,
dans laquelle la résine polyester a un poids moléculaire moyen en poids (Mw) mesuré comme décrit dans la spécification dans une plage de 10 000 à 100 000 g/mol,
dans laquelle la résine polyester a un point de fusion (Tₘ) mesuré par calorimétrie différentielle à balayage (DSC) dans une plage de 150 à 350°C, et
dans laquelle la résine polyester a une viscosité intrinsèque (IV), mesurée comme décrit dans la spécification selon la norme d'essai ASTM D2196, dans une plage de 0,7 à 1,5 cP à 25°C.

12. Résine polyester selon la revendication 6, dans laquelle la résine polyester est un téréphtalate de polybutylene (PBT).

13. Composition de résine thermoplastique comprenant la résine polyester selon la revendication 6.

14. Article moulé comprenant la résine polyester selon la revendication 6.

15. Article moulé selon la revendication 14, dans lequel l'article moulé est un film ou une fibre.
